## Europäisches Patentamt
## European Patent Office
## Office européen des brevets

(19)

(11) Numéro de publication: **0 081 395**
**B1**

(12) # FASCICULE DE BREVET EUROPEEN

(45) Date de publication du fascicule du brevet:
24.07.85

(51) Int. Cl.⁴: **C 09 K 5/04**

(21) Numéro de dépôt: **82401867.5**

(22) Date de dépôt: **11.10.82**

---

(54) **Fluide pour pompe à chaleur et procédé de chauffage et/ou de conditionnement thermique d'un local au moyen d'une pompe à chaleur à compression utilisant un fluide mixte de travail.**

---

(30) Priorité: **19.10.81 FR 8119734**
**06.05.82 FR 8208035**

(43) Date de publication de la demande:
**15.06.83 Bulletin 83/24**

(45) Mention de la délivrance du brevet:
**24.07.85 Bulletin 85/30**

(84) Etats contractants désignés:
**AT BE CH DE GB IT LI NL SE**

(56) Documents cités:
**EP - A - 0 011 971**
**DE - A - 1 419 629**
**FR - A - 2 000 830**
**SU - A - 304 282**

(73) Titulaire: **INSTITUT FRANCAIS DU PETROLE, 4, Avenue de Bois-Préau, F-92502 Rueil-Malmaison (FR)**

(72) Inventeur: **Ramet, Claude, 2, allée Edward Jenner, F-92000 Nanterre (FR)**
Inventeur: **Rojey, Alexandre, 29-33, rue Henri Regnault, F-92380 Garches (FR)**

---

ACTORUM AG

## Description

L'invention est relative à de nouveaux fluides pour pompes à chaleur et à un procédé de chauffage et/ou conditionnement thermique d'un local au moyen d'une pompe à chaleur à compression utilisant des fluides mixtes de travail.

On a déjà proposé l'utilisation, dans les pompes à chaleur, des fluides de travail suivants:

R12: dichlorodifluorométhane (température d'ébullition: −29,8° C)

R22: monochlorodifluorométhane (température d'ébullition: −40,8° C)

R23: trifluorométhane (température d'ébullition: −82,1° C)

R550: azéotrope (teb: −33,5° C) de 73,8% en poids de dichlorodifluorométhane R12 avec 26,2% en poids de difluoroéthane R152a (teb: −24,75° C)

R501: azéotrope (teb: −41,4° C) de 75% en poids de chlorodifluorométhane R22 avec 25% en poids de dichlorodifluorométhane R12

R502: azéotrope (teb: −45,6° C) de 48,8% en poids de chlorodifluorométhane R22 avec 51,2% en poids de chloropentafluoroéthane R115 (teb: −38,7° C), et

R503: azéotrope de 40,1% en poids de trifluorométhane R23 avec 59,9% en poids de chlorotrifluorométhane R13.

Les fluides halogénés précédents sont employés couramment dans les installations de pompes à chaleur destinées au chauffage et/ou conditionnement des locaux, au chauffage urbain et aux applications industrielles à basse température, telles certaines opérations de séchage ou de concentration. L'usage du monochlorodifluorométhane (R22) ou du R502 est très fréquent dans les pompes à chaleur qui assurent le chauffage des locaux et qui utilisent, comme source froide, l'eau de nappe phréatique, de puits ou de rivière, l'air extérieur ou encore l'air extrait et, comme source chaude, l'eau de chauffage ou l'air intérieur, pour des températures pouvant atteindre 55° C à la source chaude.

La substitution du R502 au R22 dans une pompe à chaleur augmente peu la capacité thermique; par contre, elle permet une diminution sensible de la température de refoulement. L'emploi du R12 ou du R500 est particulièrement adapté à des niveaux de température relativement élevés, par exemple, supérieurs à 50° C et inférieurs à 80° C.

Deux moyens permettant d'accroître la puissance thermique délivrée par une pompe à chaleur sont déjà connus; un premier moyen est d'équiper celle-ci d'un compresseur de plus grande capacité, qui permet d'aspirer un débit volumique plus important, mais cette solution conduit à un surinvestissement. L'autre moyen d'augmenter la capacité thermique d'une pompe à chaleur consiste à utiliser un fluide de travail dont le point d'ébullition est plus bas que celui du fluide usuel. En tout état de cause, une telle substitution conduit à une dégradation du coefficient de performance et aussi à une gamme plus restreinte des applications de la machine, étant donné que la température critique du fluide à point d'ébullition plus bas et généralement plus faible.

L'utilisation de mélanges de fluides non azéotropiques dans une pompe à chaleur, en vue de l'amélioration du coefficient de performance de ladite pompe à chaleur, a fait l'objet de demandes de brevets français antérieurs (FR-A Nos 2337885, 2474151, 2474666 et 2497931).

En particulier, la demande de brevet FR-A No 2474151 décrit des mélanges non azéotropiques de deux constituants permettant d'augmenter les performances d'une pompe à chaleur et donc de réduire les coûts d'exploitation de ladite pompe à chaleur. Les mélanges à deux constituants ainsi décrits ne permettent toutefois pas d'accroître la puissance thermique pour un compresseur donné.

Le but de la présente invention est de montrer que des mélanges spécifiques de fluides permettent d'augmenter la puissance thermique délivrée par une pompe à chaleur par rapport au cas où la même pompe à chaleur fonctionne avec un fluide pur. En employant dans une pompe à chaleur les mélanges de fluides proposés par l'invention il est ainsi possible de réduire le coût d'investissement. En effet, les fluides mixtes de travail selon l'invention autorisent un accroissement de la capacité thermique d'une pompe à chaleur donnée, sans modification des composants de ladite pompe à chaleur, en particulier sans modification du compresseur.

Un premier objet de l'invention est un fluide pour pompe à chaleur constitué par un mélange de

a) 95 à 80% en mole de R22 ou R502, avec

b) 5 à 20% en mole de R23 ou R503

où R22 est le monochlorodifluorométhane, R23 le trifluorométhane, R502 un mélange de 48,8% en poids de monochlorodifluorométhane avec 51,2% en poids de chloropentafluoroéthane et R503 un mélange de 40,1% en poids de trifluorométhane avec 59,9% en poids de monochlorotrifluorométhane, le composant a du mélange ne formant pas d'azéotrope avec le composant b du même mélange.

Un second objet de l'invention est un procédé de chauffage et/ou de conditionnement thermique d'un local au moyen d'une pompe à chaleur à compression utilisant un fluide mixte de travail , ledit fluide prélevant de la chaleur sur une source de chaleur à une température de −15 à +40° C et cédant de la chaleur à un fluide à une température de 20 à 75° C, et ladite pompe fonctionnant avec une étape de condensation, une étape de détente, une étape d'évaporation et une étape de compression dudit fluide de travail, caractérisé en ce que le fluide de travail est une composition constituée de

a) 95 à 80% en mole de R12, R22, R500, R501 ou R502, avec

b) 5 à 20% en mole de R23 ou R503,

où R12 est le dichlorodifluorométhane, R500 un mélange de 73,8% en poids de dichlorodifluorométhane avec 26,2% en poids de difluoroéthane, R501 un mélange de 75% en poids de chlorodifluorométhane avec 25% en poids de dichlorodifluorométhane, et R22, R23, R502 et R503 sont définis comme ci-dessus, le composant a du mélange ne formant pas d'azéotrope avec le composant b du même mélange.

Dans le cycle d'une pompe à chaleur donnée, pour des conditions de fonctionnement identique, la pression d'évaporation d'un mélange du type précédent est supérieure, toutes choses égales par ailleurs, à la pression d'évaporation du constituant majoritaire, qui serait utilisé à l'état pur.

En conséquence, le volume molaire des vapeurs aspirées au compresseur est plus faible, ce qui, pour un compresseur de cylindrée donnée, augmente le débit molaire de fluide et donc la capacité thermique de la pompe à chaleur. Par ailleurs, l'utilisation d'un fluide mixte de travail comprenant un constituant majoritaire (R22 ou R12 ou R500 ou R501 ou R502) et un constituant minoritaire (R23 ou R503) dont la température d'ébullition est plus basse conduit en général à une réduction du taux de compression. Cela augmente le rendement volumétrique dans le cas des compresseurs alternatifs à pistons et est donc favorable également à une augmentation de la capacité thermique. Celle-ci est d'autant plus élevée que la concentration molaire du constituant minoritaire est importante. La fraction molaire du constituant minoritaire (R23 ou R503) devra être comprise entre 5 et 20%; en effet, une proportion trop importante de ce constituant entraîne une dégradation du coefficient de performance et une pression de condensation excessive. En effet, les compresseurs ont un domaine d'application limité par certains paramètres de fonctionnement (température de refoulement et différence de pression maximales) et, en particulier, par la pression maximale de refoulement. La pression de condensation d'un mélange selon l'invention sera de préférence inférieure à 30 bar.

Les mélanges de fluides proposés par l'invention sont plus particulièrement utilisables lorsque la température de la source chaude est comprise, de préférence, entre 20 et 75° C et celle de la source froide, de préférence entre −15 et +40° C.

Les pompes à chaleur, dans lesquelles les mélanges définis précédemment sont utilisables, peuvent être d'un type quelconque. Le compresseur peut être, par exemple, un compresseur à pistons lubrifiés ou à pistons secs, un compresseur à vis ou un compresseur centrifuge. Les échangeurs peuvent être, par exemple, des échangeurs double tube, des échangeurs à tube et calandre, des échangeurs à plaques ou des échangeurs à lamelles ou des échangeurs classiques à ailettes pour un transfert thermique avec de l'air. On préfère un mode d'échange à contre-courant; celui-ci est bien réalisé dans le cas des échangeurs coaxiaux utilisés pour les échanges eau/réfrigérant dans les pompes à chaleur de faible puissance. Il peut être réalisé de façon approchée dans les échangeurs air/réfrigérant selon un agencement décrit dans le brevet français No 2474666. La puissance thermique délivrée peut varier, par exemple, entre quelques kilowatts pour des pompes à chaleur utilisées en chauffage domestique de plusieurs mégawatts pour des pompes à chaleur destinées au chauffage collectif.

Un mode opératoire préféré est celui décrit dans le brevet FR-A No 2497931.

Ce mode opératoire comprend les étapes suivantes: a) on comprime le fluide mixte de travail en phase vapeur, b) on met en contact d'échange thermique le fluide mixte comprimé provenant de l'étape a avec un fluide extérieur relativement froid, et l'on maintient ce contact jusqu'à condensation sensiblement complète dudit fluide mixte, c) on met en contact d'échange thermique le fluide mixte sensiblement complètement condensé provenant de l'étape b avec un fluide de refroidissement défini à l'étape f, de manière à refroidir davantage ledit fluide mixte, d) on détend le fluide mixte refroidi provenant de l'étape c, e) on met le fluide mixte détendu, provenant de l'étape d, en contact d'échange thermique avec un fluide extérieur qui constitue une source de chaleur, les conditions de contact permettant la vaporisation partielle dudit fluide mixte détendu, f) on met le fluide mixte partiellement vaporisé, provenant de l'étape e, en contact d'échange thermique avec le fluide mixte sensiblement complètement liquéfié envoyé à l'étape c, ledit fluide mixte partiellement vaporisé constituant le fluide de refroidissement de ladite étape c, les conditions de contact permettant de poursuivre la vaporisation commencée à l'étape e, et g) on renvoie le fluide mixte vaporisé, provenant de l'étape f, à l'étape a.

Les exemples suivants illustrent la mise en œuvre des mélanges spécifiques de fluides selon l'invention.

*Exemple 1:*

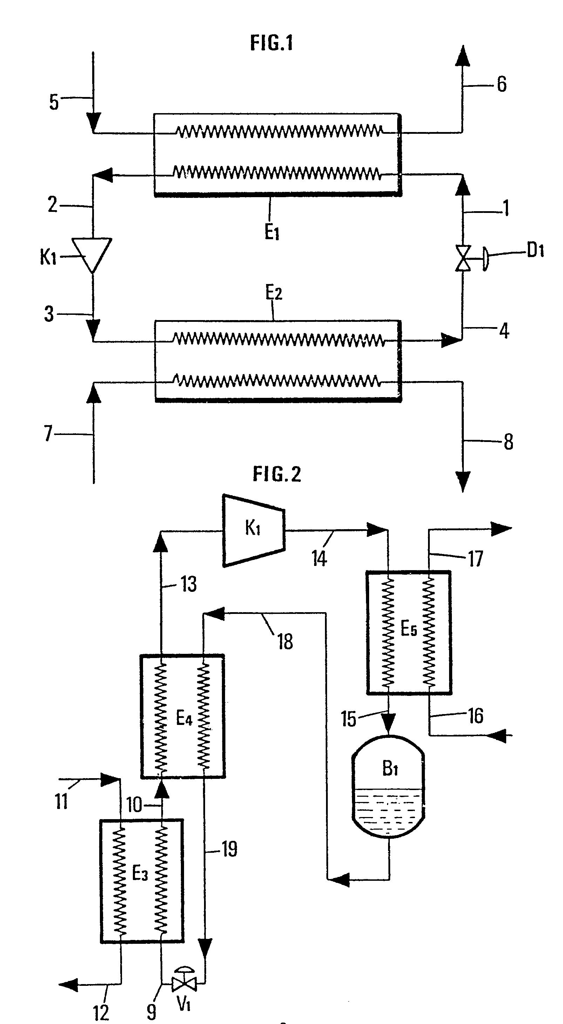

On considère la pompe à chaleur eau/eau schématisée sur la fig. 1. Cette pompe à chaleur comprend un évaporateur E1 dans lequel le mélange est introduit par le conduit 1 et d'où il ressort vaporisé par le conduit 2, un compresseur K1 dans lequel le mélange vapeur est comprimé et d'où il ressort par le conduit 3 pour être envoyé dans le condenseur E2, d'où il ressort condensé par le conduit 4 puis est détendu dans la vanne de détente D1 et est recyclé à l'évaporateur. L'évaporateur et le condenseur sont constitués par des échangeurs double tube dans lesquels les fluides entre lesquels s'effectuent les échanges thermiques circulent à contre-courant.

La source froide est constituée par l'eau extraite d'une nappe phréatique. Cette eau pénètre dans l'évaporateur E1 par le conduit 5 à une température de 12° C et ressort de l'évaporateur E1 par le conduit 6 à une température de 5° C.

L'eau qui est chauffée par le condenseur E2 arrive par le conduit 7 et est évacuée par le conduit 8.

Deux cas de fonctionnement sont considérés selon la nature du système de chauffage et la température de retour de l'eau.

A) *Chauffage par radiateurs:* température de retour de l'eau au condenseur 42° C (ligne 7), température de chauffage de l'eau: 50° C (ligne 8).

B) *Chauffage par planchers chauffants:* température de retour de l'eau au condenseur: 20,5° C, température de chauffage de l'eau 34° C.

Les débits d'eau dans l'évaporateur et dans le condenseur sont fonction de la capacité de la pompe à chaleur correspondant au fluide de travail employé.

Le tableau I indique les résultats comparés dans chacun des cas A et B entre:
— le fonctionnement de la pompe à chaleur utilisant du chlorodifluorométhane pur (R22);
— le fonctionnement de la pompe à chaleur utilisant un mélange non azéotropique comprenant: 85% en mole de chlorodifluorométhane (R22) et 15% en mole de trifluorométhane (R23).

Le COP représente le rapport de la puissance thermique délivrée à la puissance de compression transmise au fluide.

*Tableau I*

| Cas de fonctionnement | A | | B | |
|---|---|---|---|---|
| Fluide | R22 | mélange R22/R23 | R22 | mélange R22/R23 |
| Puissance thermique (W) | 14 260 | 17 101 | 14 820 | 18 376 |
| COP | 3,52 | 3,48 | 4,56 | 4,63 |
| Pression d'aspiration (bars) | 4,65 | 5,72 | 4,50 | 5,62 |
| Pression de refoulement (bars) | 20,64 | 25,13 | 15,15 | 18,42 |
| Taux de compression | 4,44 | 4,39 | 3,37 | 3,28 |

Le mélange proposé, comparé au R22 pur pour des conditions de températures identiques à la source chaude et à la source froide, permet un gain en capacité thermique de 20% dans le cas A et de 24% dans le cas B, le COP étant pratiquement conservé dans chacun des cas.

La puissance thermique et le COP obtenus avec le mélange R22/R23 sont également nettement supérieurs à ceux pouvant être obtenus avec l'azéotrope R502 utilisé seul. Par exemple, dans le cas A, le R502 permet une puissance thermique de 14 545 W — soit un gain seulement de 2% par rapport au R22 pur — et un COP de 3,26. De façon générale, les mélanges proposés peuvent être très optimisés en composition pour un gain de capacité thermique supérieur à 20% par rapport à un fluide pur et un COP identique à celui du fluide pur de référence. De telles performances ne peuvent être atteintes, en tout état de cause, par la substitution par exemple du R502 au R22 ou du R500 au R12.

Le brevet français N° 2474151 citait le mélange composé de R22 et de chlorotrifluorométhane R13 ($t_{eb}$ = −81,4° C). Les résultats obtenus avec ce mélange comportant 85% en mole de R22 et 15% en mole de R13 sont comparés, dans le tableau II, avec ceux obtenus lorsqu'on utilise le mélange précité R22/R23 (85%/15%).

*Tableau II*

| Cas de fonctionnement | A | | B | |
|---|---|---|---|---|
| Mélange | R22/R23 | R22/R13 | R22/R23 | R22/R13 |
| Puissance thermique (W) | 17 101 | 16 214 | 18 376 | 17 488 |
| COP | 3,48 | 3,43 | 4,63 | 4,55 |
| Pression d'aspiration (bars) | 5,72 | 5,65 | 5,62 | 5,54 |
| Pression de refoulement (bars) | 25,13 | 24,37 | 18,42 | 18,01 |
| Taux de compression | 4,39 | 4,32 | 3,28 | 3,25 |

Donc, pour des pressions de fonctionnement pratiquement identiques, le mélange R22/R23 permet une puissance calorifique sensiblement supérieure à celle du mélange R22/R13.

La température de chauffage atteinte avec une pompe à chaleur du type eau/eau ou air/eau et utilisant le mélange R22/R23 sera inférieure à 55° C et de préférence inférieure ou égale à 52° C, si l'on veut que la pression de refoulement soit inférieure à 30 bar et de préférence inférieure à 28 bar. La fraction molaire de R23 dans un mélange R22/R23 ou R502/R23 sera comprise de préférence entre 12 et 18%. La variation de température de l'eau au condenseur sera de préférence comprise entre 5 et 15° C, afin d'être voisine de l'intervalle de condensation des mélanges proposés par l'invention. Dans le cas d'un fluide pur, la température de condensation est peu sensible à la température de retour de l'eau, puisqu'elle est par principe plus grande que la température de chauffage. Par contre, pour les mélanges non azéotropiques proposés, dans le cas d'un condenseur à eau à contre-courant, la température en fin de condensation et la pression correspondantes sont fonction directement de la température d'entrée de l'eau au condenseur. Ainsi, dans le cas A de fonctionnement décrit précédemment, l'intervalle de condensation du mélange est de 8° C, comme la variation de température de l'eau (42 à 50° C).

Si l'eau chauffée par la pompe à chaleur doit atteindre des températures élevées, par exemple, supérieures à 60° C, le dichlorodifluorométhane (R12) ou le mélange azéotrope R500 peuvent être substitués au chlorodifluorométhane (R22), afin de diminuer la pression haute du circuit. Ainsi un mélange selon l'invention comprenant du dichlorodifluorométhane (R12) associé à du trifluorométhane (R23) permet d'obtenir, pour des conditions de fonctionnement données, une capacité thermique supérieure à celle obtenue avec le R12 pur. Ainsi un mélange comprenant 87,5% en fraction molaire de R12 et 12,5% en fraction molaire de R23 autorise une augmentation de la capacité thermique de 26% dans le cas A, la pression atteinte au refoulement du compresseur étant inférieure à 17 bar.

La fraction molaire en R23 dans un mélange du type R12/R23 ou R500/R23 sera comprise de préférence entre 8 et 18%. Dans le cas d'un condenseur à eau, la température de chauffage sera de préférence inférieure à 75° C.

Le schéma de fonctionnement décrit dans le brevet FR-A N° 2497931 apporte un avantage supplémentaire sur le plan de la capacité thermique pour un mélange non azéotropique de fluides donné. Cela constitue l'objet de l'exemple 2.

*Exemple 2:*

Le schéma de fonctionnement de la pompe à chaleur est représenté par la fig. 2.

Le fluide mixte de travail, issu du détendeur par le conduit 9, est partiellement vaporisé dans l'évaporateur E3 par le refroidissement de l'eau de la source froide qui circule à contre-courant du fluide de travail et qui entre dans l'évaporateur E3 par le conduit 11 et en ressort par le conduit 12. Issu de l'évaporateur E3 par le conduit 10, le mélange de travail est entièrement vaporisé et éventuellement surchauffé dans l'échangeur E4, par échange à contre-courant avec le condensat sous-refroidi qui pénètre dans E4 par le tuyau 18 et qui est évacué par le tuyau 19.

Le fluide mixte de travail à l'état gazeux est aspiré dans le compresseur K1 par le tuyau 13 et est refoulé à haute pression par le tuyau 14. Ensuite, il est sous-refroidi et totalement condensé dans le condenseur E5 dans lequel il pénètre par le conduit 14 et d'où il ressort à l'état de liquide saturé par le conduit 15. Au cours de la condensation dans E5, le mélange cède la puissance thermique utile à l'eau de chauffage qui, entre le tuyau d'arrivée 16 et le tuyau de sortie 17, circule à contre-courant du fluide de travail. Le mélange, une fois condensé dans E5, pénètre par la conduite 15 dans le ballon de recette B1 et ressort par la conduite 18; il est ensuite sous-refroidi dans l'échangeur E4 et accède au détendeur V1 par le tuyau 19.

Sur le plan de la capacité, ce schéma apporte une amélioration lorsque le fluide de travail est un mélange de fluides non azéotropique, car l'échangeur E4 où se réalise la fin de la vaporisation permet d'atteindre pour le mélange une température en fin d'ébullition plus élevée, donc une pression d'aspiration plus forte. Ce procédé permet à la fois une réduction du volume molaire à l'aspiration et une baisse du taux de compression.

Le tableau III exprime les résultats obtenus avec le même mélange et les mêmes conditions de fonctionnement que dans l'exemple 1. Les résultats obtenus avec le chlorodifluorométhane pur (R22) dans l'exemple 1 sont mentionnés, à titre de référence. Le schéma de fonctionnement de la fig. 2, en effet, ne modifie pas les performances de la pompe à chaleur fonctionnant avec un fluide pur. Le mélange, spécifié dans l'exemple 1, a la composition molaire suivante: chlorodifluorométhane (R22) : 85% et trifluorométhane (R23) : 15%. Les cas de fonctionnement A et B ont été explicités dans l'exemple 1.

Selon le schéma de fonctionnement représenté par la fig. 1, le mélange choisi augmente la capacité thermique de l'installation fonctionnant avec le R22 de 28% dans le cas A et de 30% dans le cas B. Par ailleurs, l'emploi du mélange améliore le COP obtenu avec le chlorodifluorométhane de 2,8% dans le cas A et de 5,2% dans le cas B.

Le schéma de la fig. 2 nécessite un surinvestissement, représenté par l'échangeur E4; mais il est généralement faible.

Dans l'exemple traité, cet échangeur peut être constitué de deux tubes lisses concentriques ayant une surface de contact de 0,25 m².

*Tableau III*

| Cas de fonctionnement | A | | B | |
|---|---|---|---|---|
| Fluide | R22 | R22/R23 | R22 | R22/R23 |
| Puissance thermique (W) | 14 260 | 18 324 | 14 820 | 19 268 |

| Cas de fonctionnement | A | | B | |
|---|---|---|---|---|
| COP | 3,52 | 3,62 | 4,56 | 4,80 |
| Pression d'aspiration (bars) | 4,65 | 6,10 | 5,72 | 5,88 |
| Pression de refoulement (bars) | 20,64 | 25,09 | 15,15 | 18,37 |
| Taux de compression | 4,44 | 4,11 | 3,37 | 3,13 |

*Exemple 3:*

L'emploi du mélange azéotropique R502 au lieu du R22 permet d'atteindre une température de refoulement dans le compresseur sensiblement plus basse et d'éviter dans le cas des compresseurs hermétiques un échauffement anormal du moteur. Cet avantage devient important dans le cas des pompes à chaleur air/eau fonctionnant à des températures extérieures très faibles.

On opère avec une pompe à chaleur air/eau utilisant le R502; l'air passant dans l'évaporateur à un débit de 6000 m³/h, une température d'entrée de 7°C et une humidité relative de 86%. L'eau qui circule au condenseur est chauffée de 45 à 50°C. Avec un mélange non azéotropique comprenant 14% en mole de R503 et 86% en mole de R502, on obtient les résultats du tableau IV.

*Tableau IV*

| Fluide | R502 | Mélange R502/R503 |
|---|---|---|
| Puissance thermique (W) | 11 932 | 13 531 |
| COP | 2,96 | 2,92 |
| Température de refoulement (°C) | 85,2 | 88,7 |
| Pression d'aspiration (bars) | 5,53 | 6,47 |
| Pression de refoulement (bars) | 21,85 | 25,20 |

Le mélange proposé apporte un gain de capacité thermique de 13,4% par rapport au R502, alors que le COP et la température de refoulement sont pratiquement conservés.

De façon générale, la fraction molaire en R503 dans un mélange R502/R503 ou R22/R503 sera comprise de préférence entre 8 et 15%; dans un mélange R500/R503 ou R12/R503, elle sera comprise de préférence entre 5 à 15%.

*Exemple 4:*

D'autres mélanges ont été utilisés dans une pompe à chaleur du type eau/eau et ont fourni une puissance thermique accrue:
a) 87% en mole de R22 et 13% en mole de R503
b) 88% en mole de R12 et 12% en mole de R503
c) 90% en mole de R500 et 10% en mole de R23
d) 92% en mole de R500 et 8% en mole de R503
e) 85% en mole de R502 et 15% en mole de R23
f) 85% en mole de R501 et 15% en mole de R23
g) 87% en mole de R501 et 13% en mole de R503

Les revendications qui suivent concernent les mélanges à deux constituants essentiels qui ont été décrits dans la présente demande de brevet. Il est entendu que l'invention couvre aussi les mélanges renfermant, outre les constituants précités, des quantités mineures (moins de 5% molaire et de préférence moins de 1% molaire) d'impuretés qui n'altèrent pas sensiblement le bon comportement de ces mélanges quand on les utilise dans les pompes à chaleur ou pour le conditionnement thermique de locaux, ces impuretés pouvant par exemple être des dérivés halogénés d'hydrocarbures autres que ceux revendiqués et constituant des sous-produits de la fabrication des dérivés halogénés revendiqués.

**Revendications**

1. Fluide pour pompe à chaleur constitué par un mélange de
   a) 95 à 80% en mole de R22 ou R502, avec
   b) 5 à 20% en mole de R23 ou R503
où R22 est le monochlorodifluorométhane, R23 le trifluorométhane, R502 un mélange de 48,8% en poids de monochlorodifluorométhane avec 51,2% en poids de chloropentafluoroéthane et R503 un mélange de 40,1% en poids de trifluorométhane avec 59,9% en poids de monochlorotrifluorométhane, le composant (a) du mélange ne formant pas d'azéotrope avec le composant (b) du même mélange.

2. Fluide selon la revendication 1, comprenant
a) 88 à 82% en mole de R22 ou R502, avec
b) 12 à 18% en mole de R23.

3. Procédé de chauffage et/ou de conditionnement thermique d'un local au moyen d'une pompe à chaleur à compression utilisant un fluide mixte de travail, ledit fluide prélevant de la chaleur sur une source de chaleur à une température de −15 à +40° C et cédant de la chaleur à un fluide à une température de 20 à 75° C, et ladite pompe fonctionnant avec une étape de condensation, une étape de détente, une étape d'évaporation et une étape de compression dudit fluide de travail, caractérisé en ce que le fluide de travail est une composition constituée de
a) 95 à 80% en mole de R12, R22, R500, R501 ou R502, avec
b) 5 à 20% en mole de R23 ou R503
où R12 est le dichlorodifluorométhane, R500 un mélange de 73,8% de dichlorodifluorométhane avec 26,2% de difluoroéthane, R501 un mélange de 75% de chlorodifluorométhane avec 25% de dichlorodifluorométhane, et R22, R23, R502 et R503 sont définis comme à la revendication 1, de composant (a) du mélange ne formant pas d'azéotrope avec le composant (b) du même mélange.

4. Procédé selon la revendication 3, dans lequel le fluide de travail est celui de la revendication 2 et dans lequel la pompe à chaleur fournit de la chaleur à un fluide dont la température d'entrée est supérieure à 20° C et dont la température de sortie est inférieure à 55° C et prélève de la chaleur à une source de chaleur dont la température est supérieure à −15° C.

5. Procédé selon la revendication 3, dans lequel le fluide de travail comprend 92 à 82% en mole de R12 ou R500 avec 8 à 18% en mole de R23, et dans lequel la pompe à chaleur fournit de la chaleur à un fluide dont la température d'entrée est supérieure à 40° C et dont la température de sortie est inférieure à 75° C et prélève de la chaleur à une source de chaleur dont la température est supérieure à 5° C.

6. Procédé selon l'une des revendications 3 à 5, caractérisé en ce que la pompe à chaleur opère dans des conditions telles que (a) on comprime le fluide mixte de travail en phase vapeur, (b) on met en contact d'échange thermique le fluide mixte comprimé provenant de l'étape (a) avec un fluide extérieur de refroidissement, et l'on maintient ce contact jusqu'à condensation sensiblement complète dudit fluide mixte, (c) on met en contact d'échange thermique le fluide mixte sensiblement complètement condensé provenant de l'étape (b) avec un fluide de refroidissement défini à l'étape (f), de manière à refroidir davantage ledit fluide mixte, (d) on détend le fluide mixte refroidi provenant de l'étape (c), (e) on met le fluide mixte détendu, provenant de l'étape (d), en contact d'échange thermique avec un fluide extérieur qui constitue une source de chaleur, les conditions de contact permettant la vaporisation partielle dudit fluide mixte détendu, (f) on met le fluide mixte partiellement vaporisé, provenant de l'étape (e), en contact d'échange thermique avec le fluide mixte sensiblement complètement liquéfié envoyé à l'étape (c), ledit fluide mixte partiellement vaporisé constituant le fluide de refroidissement de ladite étape (c), les conditions de contact permettant de poursuivre la vaporisation commencée à l'étape (e), et (g) on renvoie le fluide mixte vaporisé, provenant de l'étape (f) à l'étape (a).

**Patentansprüche**

1. Flüssigkeit für eine Wärmepumpe, bestehend aus einem Gemisch von
a) 95 bis 80 Mol-% R22 oder R502, mit
b) 5 bis 20 Mol-% R23 oder R503,
wobei R22 Monochlordifluormethan, R23 Trifluormethan, R502 ein Gemisch von 48,8 Gew.-% Monochlordifluormethan mit 51,2 Gew.-% Chlorpentafluoräthan und R503 ein Gemisch von 40,1 Gew.-% Trifluormethan mit 59,9 Gew.-% Monochlortrifluormethan ist, wobei der Bestandteil (a) des Gemisches kein Azeotrop mit dem Bestandteil (b) des gleichen Gemisches bildet.

2. Flüssigkeit gemäss Anspruch 1, bestehend aus
a) 88 bis 82 Mol-% R22 oder R502, mit
b) 12 bis 18 Mol-% R23.

3. Verfahren zur Erwärmung und/oder thermischen Klimatisierung eines Raumes mittels einer Kompressionswärmepumpe durch Verwendung eines gemischten Arbeitsflüssigkeit, wobei diese Flüssigkeit die Wärme aus einer Wärmequelle mit einer Temperatur von −15 bis +40° C entnimmt und die Wärme an eine Flüssigkeit mit einer Temperatur von 20 bis 75° C abgibt, wobei die Pumpe mit einer Stufe der Kondensation, einer Stufe der Entspannung, einer Stufe der Verdampfung und einer Stufe der Kompression dieser Arbeitsflüssigkeit funktioniert, dadurch gekennzeichnet, dass die Arbeitsflüssigkeit folgende Zusammensetzung hat:
a) 95 bis 80 Mol-% R12, R22, R500, R501 oder R502, mit
b) 5 bis 20 Mol-% R23 oder R503,
wobei R12 Dichlordifluormethan, R500 ein Gemisch von 73,8% Dichlordifluormethan mit 26,2% Difluoräthan, R501 ein Gemisch von 75% Chlordifluormethan mit 25% Dichlordifluormethan bedeuten und R22, R23, R502 und R503 die in Anspruch 1 angegebene Bedeutung haben, wobei der Bestandteil (a) des Gemisches kein Azeotrop mit dem Bestandteil (b) des gleichen Gemisches bildet.

4. Verfahren gemäss Anspruch 3, dadurch gekennzeichnet, dass man als Arbeitsflüssigkeit diejenige des Anspruches 2 verwendet und dass die Wärmepumpe die Wärme an eine Flüssigkeit überträgt, deren Eingangstemperatur oberhalb 20° C liegt und deren Ausgangstemperatur geringer als 55° C ist, und die Wärme aus einer Wärmequelle entnimmt, deren Temperatur oberhalb −15° C liegt.

5. Verfahren gemäss Anspruch 3, dadurch gekennzeichnet, dass die Arbeitsflüssigkeit 92 bis 82 Mol-% R12 oder R500 und 8 bis 18 Mol-% R23 enthält und dass die Wärmepumpe die Wärme an eine Flüssigkeit überträgt, deren Eingangstemperatur höher als 40° C und deren Ausgangstemperatur geringer als 75° C ist, und die Wärme aus einer Wärmequelle entnimmt, deren Temperatur oberhalb 5° C liegt.

6. Verfahren gemäss Ansprüchen 3 bis 5, dadurch gekennzeichnet, dass die Wärmepumpe unter solchen Bedingungen arbeitet, dass (a) man die gemischte Arbeitsflüssigkeit in Dampfphase komprimiert, (b) die komprimierte gemischte Flüssigkeit aus Stufe (a) in Wärmeaustausch-Kontakt mit einer äusseren Kälteflüssigkeit bringt und diesen Kontakt bis zur praktisch vollständigen Kondensation der gemischten Flüssigkeit aufrechterhält, (c) die praktisch vollständig kondensierte flüssige Mischung aus Stufe (b) in Wärmeaustausch-Kontakt mit einer Kälteflüssigkeit bringt, die in Stufe (f) definiert ist, so dass die flüssige Mischung noch mehr abgekühlt wird, (d) die abgekühlte flüssige Mischung aus Stufe (c) entspannen lässt, (e) die entspannte flüssige Mischung aus Stufe (d) in Wärmeaustauschkontakt mit einer äusseren Flüssigkeit bringt, welche eine Wärmequelle darstellt, wobei die Kontaktbedingungen eine partielle Verdampfung der entspannten flüssigen Mischung erlauben, (f) die partiell verdampfte flüssige Mischung aus Stufe (e) in Wärmeaustauschkontakt mit der praktisch völlig verflüssigten gemischten Flüssigkeit aus Stufe (c) bringt, wobei diese partiell verdampfte gemischte Flüssigkeit die Kälteflüssigkeit der Stufe (c) darstellt und die Kontaktbedingungen so sind, dass man die in Stufe (e) begonnene Verdampfung fortsetzen kann und (g) die verdampfte flüssige Mischung aus Stufe (f) in die Stufe (a) zurückleitet.

### Claims

1. Heat pump fluid mixture consisting of a mixture of
(a) 95 to 80% by mole of R22 or R502 with
(b) 5 to 30% by mole of R23 or 503
where R22 is monochlorodifluoromethane, R23 is trifluoromethane, R502 is a mixture of 48.8% by weight of chlorodifluoromethane with 51.2% by weight of chloropentafluoroethane and R503 is a mixture of 40.1% by weight of trifluoromethane with 59.9% by weight of monochlorotrifluoromethane, component (a) of the mixture forming no azeotrope with component (b) of the same mixture.

2. Fluid according to Claim 1 comprising
(a) 88 to 82% by mole of R22 or R502 with
(b) 12 to 18% by mole of R23.

3. A process for heating or thermal conditioning a house by means of a compression heat pump operating with a mixed working fluid, said fluid taking heat from a heat source at a temperature from −15 to +40° C and releasing heat to a fluid at a temperature from 20 to 75° C, and said pump working with a condensation step, an expansion step, a vaporization step and a compression step of said working fluid, characterized in that the working fluid is a composition consisting of
(a) 95 to 80% by mole of R12, R22, R500, R501 or R502 with
(b) 5 to 20% by mole of R23 or R503
where R12 is dichlorodifluoromethane, R500 is a mixture of 73.8% by weight of dichlorodifluoromethane with 26.2% by weight of difluoroethane, R501 is a mixture of 75% by weight of chlorodifluoromethane with 25% by weight of dichlorodifluoromethane, and R22, R23, R502 and R503 have the same meaning as in Claim 1, the component (a) of the mixture forming no azeotrope with the component (b) of the same mixture.

4. A process according to Claim 3 wherein the working fluid is that of Claim 2 and wherein the heat pump supplies heat to a fluid whose input temperature is higher than 20° C and whose output temperature is lower than 55° C and receives heat from a heat source whose temperature is higher than −15° C.

5. A process according to Claim 3 wherein the working fluid comprises 92 to 82% by mole of R12 or R500 with 8 to 18% by mole of R23 and wherein the heat pump supplies heat to a fluid whose input temperature is higher than 40° C and whose output temperature is lower than 75° C and receives heat from a heat source whose temperature is higher than −5° C.

6. A process according to any one of Claims 3 to 5, characterized in that the heat pump operates under such conditions that:
(a) the mixed working fluid is compressed in the vapor phase,
(b) the compressed mixed fluid issued from step (a) is contacted in thermal exchange relationship with a relatively cold external fluid and said contact is maintained up to the substantially complete condensation of said mixed fluid,
(c) the substantially completely condensed mixed fluid issued from step (b) is contacted in thermal exchange relationship with a cooling fluid as defined in step (f), so as to further cool said mixed fluid,
(d) the cooled mixed fluid from step (c) is expanded,
(e) the expanded mixed fluid issued from step (d) is contacted in thermal exchange relationship with an external fluid which forms the heat source, the contact conditions providing for the partial vaporization of said expanded mixed fluid,
(f) the partially vaporized mixed fluid issued from step (e) is contacted in thermal relationship with the substantially entirely liquefied mixed fluid fed to step (c), said partially vaporized mixed fluid forming the cooling fluid of said step (c), the contact conditions being such as to complete the vaporization partially effected in step (e), and
(g) the vaporized mixed fluid from step (f) is fed back to step (a).

## FIG.1

## FIG.2